(19) Europäisches Patentamt
European Patent Office
Office européen des brevets

(11) **EP 1 474 306 B1**

(12) **EUROPÄISCHE PATENTSCHRIFT**

(45) Veröffentlichungstag und Bekanntmachung des Hinweises auf die Patenterteilung:
**27.09.2006 Patentblatt 2006/39**

(21) Anmeldenummer: **03737244.8**

(22) Anmeldetag: **03.02.2003**

(51) Int Cl.:
**B60W 10/02** (2006.01)     **B60W 10/06** (2006.01)
**F16D 48/06** (2006.01)

(86) Internationale Anmeldenummer:
**PCT/DE2003/000289**

(87) Internationale Veröffentlichungsnummer:
**WO 2003/066367 (14.08.2003 Gazette 2003/33)**

(54) **VERFAHREN ZUM VERHINDERN DES ABWÜRGENS EINES MOTORS EINES KRAFTFAHRZEUGES**

METHOD FOR PREVENTING STALLING OF AN AUTOMOTIVE ENGINE

PROCEDE POUR EMPECHER UN MOTEUR D'AUTOMOBILE DE CALER

(84) Benannte Vertragsstaaten:
**AT BE BG CH CY CZ DE DK EE ES FI FR GB GR HU IE IT LI LU MC NL PT SE SI SK TR**

(30) Priorität: **07.02.2002 DE 10205058**

(43) Veröffentlichungstag der Anmeldung:
**10.11.2004 Patentblatt 2004/46**

(73) Patentinhaber: **LuK Lamellen und Kupplungsbau Beteiligungs KG**
**77815 Bühl (DE)**

(72) Erfinder:
• **GERHART, Jürgen**
  **77767 Appenweier (DE)**
• **JUNG, Mario**
  **76547 Sinzheim (DE)**
• **SCHNEIDER, Georg**
  **76137 Karlsruhe (DE)**
• **SONG, Inho**
  **Warwickshire CV31 1BU (GB)**

(56) Entgegenhaltungen:
EP-A- 0 872 669        DE-A- 19 735 451
DE-A- 19 914 399       US-B1- 6 319 173

**Beschreibung**

Die Erfindung bezieht sich auf ein Verfahren zum Verhindern des Abwürgens eines Motors eines Kraftfahrzeuges gemäß dem Oberbegriff des Patentanspruchs 1.

Derartige Verfahren werden insbesondere bei Diesel-Fahrzeugen eingesetzt, die in ihrem Antriebsstrang eine automatisierte Kupplung aufweisen, die bei Unterschreiten einer bestimmten Drehzahl eines Teiles in ihrem Antriebsstrang, vorzugsweise einem Schwellenwert der Drehzahl des Motors selbst, der so genannten Abwürgeschwelle, geöffnet wird und erst wieder eingerückt wird, sobald die Drehzahl auf einen Wert angestiegen ist, bei dem der Motor nicht mehr abgewürgt wird. Ferner wird bei starkem Abbremsen des Fahrzeuges die Kupplung zwar nicht schlagartig, aber mit mehr oder weniger kontinuierlichem Abbau des Kupplungsmomentes langsam geöffnet, sobald eine zweite Motordrehzahl, die so genannte Auskuppelschwelle, unterschritten wird.

In der DE-A1-198 23 764 ist das Problem angesprochen, dass beim Abbremsen des Kraftfahrzeuges die Kupplung selbsttätig so öffnen muss, dass das Fahrzeug nicht unzulässig ruckelt oder der Motor nicht abgewürgt wird. Da das Öffnen der Kupplung einen gewissen Zeitraum beansprucht, muss das Öffnen bei abbremsendem Fahrzeug bei Motordrehzahlen beginnen, die deutlich über der sogenannten Abwürgedrehzahl, d. h. der erwähnten Abwürgeschwelle liegen. Hierzu wird die zeitliche Änderung der Drehzahl, d. h. der Drehzahlgradient, bestimmt und der Schwellenwert, bei der die Kupplung geöffnet wird, um so höher gelegt, je größer die zeitliche Abnahme der Drehzahl ist.

Es bestehen jedoch bei derartigen Kraftfahrzeugen weitere Probleme:

Wird das Fahrzeug nicht im ersten oder zweiten Gang oder im Rückwärtsgang angefahren, so wird das Kupplungsmoment derart verändert, dass sich das Anfahren durch Ruckeln äußert. Dadurch wird der Fahrer darauf hingewiesen, dass er sich in einem falschen Gang befindet. Nach einer bestimmten Zeit wird die Kupplung rampenförmig geschlossen, d. h. zugezogen, damit der Synchronbetrieb erreicht werden kann. Dieses Vorgehen soll die Kupplung vor Überlastung schützen.

Die erwähnte Ruckelfunktion wird in den niedrigen Gängen bzw. dem Rückwärtsgang ebenfalls aktiviert, wenn die Kupplungstemperatur einen bestimmten Grenzwert überschreitet.

Bei derartigen Fahrzeugen kommt es vor, dass der Motor während des Zuziehens der Kupplung entweder in der Rampenphase oder beim vollständigen Zuziehen der Kupplung abgewürgt wird.

Des weiteren kann es vorkommen, dass trotz Setzen des Kupplungsmoments auf den Wert 0, um damit die Kupplung zu öffnen, durch die Systemverzögerung des Kupplungsstellers die Kupplung nicht schnell genug geöffnet werden kann, so dass der Motor dennoch abgewürgt wird.

In der Steuerungssoftware für den Motor und den Antriebsstrang sind bei herkömmlichen Lastkraftwagen Maßnahmen gespeichert, die das Abwürgen des Motors verhindern sollen; so werden z.B. beim Anhalten des Kraftfahrzeugs präventiv die jeweiligen Auskuppeldrehzahlen in abwürgegefährdeten Situationen angepasst und unterhalb einer bestimmten Motordrehzahl, die z.B. abhängig von der Leerlaufdrehzahl, dem Gang und dem Gradienten der Getriebeeingangsdrehzahl ist, das Kupplungsmoment auch definiert. Unterhalb einer kritischen Motordrehzahl der bereits erwähnten Abwürgedrehzahl bzw. Abwürgeschwelle wird die Kupplung sofort vollständig ausgerückt.

Es hat sich jedoch herausgestellt, dass eine erhöhte Abwürgegefahr durch folgende Situationen verursacht wird:

So können z.B. Verbraucher, wie die Klimaanlage, die Lichtmaschine, die Servolenkung oder die Heckscheibenheizung den Motor durch übermäßig hohe Lastmomente belasten;

In der Warmlaufphase, in der die Kühlwassertemperatur unter der Grenztemperatur liegt, ist der Motor, und insbesondere ein Dieselmotor, nur begrenzt leistungsfähig, wobei dann auch der Leerlaufregler unter Umständen auf Lastsprünge nicht hinreichend schnell reagiert;

Ebenso besteht eine Abwürgegefahr, wenn das Fahrzeug stark abgebremst wird, so dass die Getriebedrehzahl mit hoher Geschwindigkeit sinkt;

Schließlich besteht eine Abwürgegefahr, wenn der Verbrennungsmotor durch ein zu hohes Kupplungsreibmoment sehr stark verzögert wird, wodurch die Motordrehzahl mit hoher Geschwindigkeit sinkt.

In der DE 199 14 399 A1 wird offenbart, dass eine die zeitliche Änderung einer erfaßten Drehzahlgröße wie beispielsweise der Motordrehzahl repräsentierende Gradientengröße ermittelt wird. Ein Kupplungsstellglied wird abhängig von der ermittelten Gradientengröße im Sinne eines Öffnens der Kupplung angesteuert. Dadurch kann die Kupplung bei geringer Verzögerung der Drehzahlgröße relativ spät geöffnet werden, während sie bei starker Verzögerung früh geöffnet wird, so dass die Abwürgewahrscheinlichkeit des Motors reduziert wird.

Der vorliegenden Erfindung liegt die Aufgabe zugrunde, dass Abwürgen des Motors in den angesprochenen Situationen zuverlässig zu verhindern.

Diese Aufgabe wird gemäß der Erfindung durch die Merkmale des Patentanspruchs 1 gelöst.

Demgemäss kann beim Erkennen eines möglichen Abwürgens des Motors die Abwürgeschwelle und/oder die Auskuppelschwelle situationsbedingt verändert werden. Vorzugsweise wird die Abwürgeschwelle, ausgehend von einem vorgegebenen Startwert und/oder einer Auskuppelschwelle, ebenfalls ausgehend von einem Startwert, situationsbedingt verändert. Sobald demnach die Motordrehzahl eine bestimmte Schwelle unterschreitet und das Zündungssignal nach wie vor aktiv ist, besteht die Gefahr des Abwürgens. Diese Schwelle der Motordrehzahl sollte so tief gewählt werden, dass sie während einer normalen Betriebsphase nicht erreicht wird. Ein typischer Wert hierfür ist etwa 400 UpM. Wird aufgrund dieser Kriterien die Gefahr des Abwürgens erkannt, können die Abwürgeschwelle und/oder die Auskuppelschwelle angepasst werden, im allgemeinen erhöht werden, wobei dann diese neuen Schwellenwerte im Speicher, z.B. einem EEProm des Steuergeräts, abgespeichert werden. Für weitere Betriebsphasen werden dann diese neuen Schwellenwerte verwendet, so dass auch in dieser neuen Betriebsphase ein besserer Abwürgeschutz vorliegt.

Unterschreitet die Motordrehzahl die erwähnte Abwürgeschwelle, so wird die Kupplung schlagartig geöffnet; unterschreitet die Motordrehzahl die Auskuppelschwelle, so wird die Kupplung nicht schlagartig geöffnet, sondern es wird begonnen, Kupplungsmomente gezielt abzubauen.

Die Anpassung der beiden Schwellenwerte kann in Inkrementen erfolgen, wobei dieses Inkrement entweder fest oder auch variabel sein kann. Die Inkremente sind hierbei bevorzugt im Bereich des Startwerts der beiden Schwellenwerte groß und werden in Richtung auf einen oberen Grenzwert kleiner gewählt. Beide Schwellen sind hierbei auf einen oberen Grenzwert beschränkt.

Gemäß einer bevorzugten Ausführungsform der Erfindung werden im Speicher des Steuergeräts die Anzahl der erkannten Abwürgerisiken bzw. der Abwürger sowie die Anzahl der Fahrzyklen gespeichert. Sinkt dann das Verhältnis der Anzahl der Abwürger zu der Anzahl der Fahrzyklen ab, was bedeutet, dass in dem jeweiligen Fahrzyklus durch die vorhergehende Anpassung der Schwellenwerte das Abwürgerisiko wesentlich verringert wurde, so können die Schwellenwerte wieder auf einen Wert erniedrigt werden, der immer noch einen zuverlässigen Fahrbetrieb zulässt. Die Schwellenwerte sollten jedoch nicht tiefer als auf den Startwert abgesenkt werden.

Durch eine Überwachung der einzelnen Fahrsituationen und deren Unterteilung in bestimmte Betriebszyklen bzw. Betriebsabschnitte kann auf diese Weise ein zuverlässiger Fahrbetrieb gewährleistet werden, wobei die Elektronik des Steuergeräts aufgrund der in früheren Betriebszyklen erfassten Daten quasi "lernt". Wird von dem Steuergerät für den Antriebsstrang des Fahrzeugs eine der oben genannten Situationen erkannt oder durch andere Sensoren bzw. Modellrechnungen erfasst, nämlich dass ein hoher Momentenbedarf der Verbraucher im Fahrzeug, ein kalter Motor, eine starke Bremsbetätigung oder eine kritische Reibmomenterhöhung der Kupplung vorliegt, und zumindest eine dieser Situationen vorliegt, werden ebenfalls die Abwürge- und/oder Auskuppelschwelle auf festgelegte Weise verändert. Es kann z.B. durch Addition eines konstanten Werts auf die ursprünglichen Schwellwerte geschehen. Es ist denkbar, dass auch ein funktionaler, z.B. linearer Zusammenhang zwischen der Höhe der Abwürgegefahr und der Veränderung der Schwellenwerte vorliegt. Ebenfalls ist eine Kombination dieser beiden Maßnahmen möglich. Wie bereits oben erwähnt, kann die Anhebung der Schwellenwerte auch in diesem Fall inkrementell erfolgen, wobei ebenfalls Grenzwerte festgelegt werden. Wenn die Schwellen von mehreren Größen abhängen, so z.B. der Motordrehzahl und dem Drehzahlgradienten, so können die einzelnen Grenzwerte für diese Größen einzeln oder gemeinsam verändert werden. Die Höhe der Veränderung der beiden Schwellen kann je nach der Situation unterschiedlich ausfallen. Es ist nicht notwendig, dass die Erhöhung und/oder Erniedrigung der Werte jeweils gleich ist.

Sobald die oben angegebenen Situationen, d.h. hoher Momentenbedarf, kalter Motor, starke Bremsbetätigung und kritischer Reibmomenterhöhung der Kupplung, nicht mehr erfüllt sind, werden die Abwürge- und/oder Auskuppelschwelle auf einen Standard- bzw. Startwert zurückgesetzt. Dieses Zurücksetzen vom aktuellen Wert auf den Standardwert kann über eine Übergangsfunktion, z.B. eine Rampenfunktion, erfolgen.

Die oben angesprochenen Situationen können entweder direkt im Steuergerät des Antriebsstrangs detektiert werden. Dies kann z. B. dann erfolgen, wenn Verbraucher, eventuell über eine Steuereinheit mit einem CAN-Bus oder auch direkt verbunden sind, einen Momentenbedarf anzeigen. Beispielsweise können Informationen über Bits, wie z. B. "Klimaanlage oder Momentenwerte, übertragen werden. Möglich sind natürlich auch andere Verfahren. Verbraucher können u. a. die Lichtmaschine, die Klimaanlage und die Servolenkung sein. So kann z.B. bei der Servolenkung auch aus dem Lenkwinkelsignal auf den Momentenbedarf geschlossen werden.

Es ist auch möglich, dass z. B. die Kühlwassertemperatur von der Steuerung in einem Modell aus den Daten Außentemperatur, Motorabstellzeit und Dauer des aktuellen Fahrzyklus geschätzt wird, z.B. unter Annahme eines $PT_1$-Verhaltens mit bekannter Zeitkonstante.

Ferner ist denkbar, dass Informationen über den aktuellen Bremsdruck über den CAN-Bus zur Verfügung stehen. Eine starke Bremsbetätigung kann unmittelbar aus dem aktuellen Bremsdruck abgeleitet werden, z.B. wenn der Bremsdruck länger als eine gewisse Zeitdauer oberhalb eines bestimmten Drucks liegt. Ebenso wäre eine Verwendung des Integrals des Bremsdrucks oder des Bremsdruckgradienten denkbar.

Des weiteren kann eine kritische Reibmomentenerhöhung der Kupplung beim Anfahren direkt von dem Steuergerät detektiert werden. Dies kann z.B. dann erfolgen, wenn sich die Steuerung im Zustand "Anfahren" befindet und der Gradient des Reibmoments an der Kupplung einen bestimmten Wert überschreitet, wodurch ein Abwürgen beim Anfahren, durch ein Kriechen oder Ruckeln signalisiert wird.

Des weiteren kann eine abwürgegefährdete Situation erkannt werden, wenn z.B. die Größen Gang, Motordrehzahl, Fahrzeuggeschwindigkeit und Drehzahlgradient bestimmte Werte über- oder unterschreiten. Bei einer Abhängigkeit von Motordrehzahl und Drehzahlgradient liegt z.B. dann eine abwürgegefährdete Situation vor, wenn der Zustandsvektor, gebildet aus diesen beiden Größen, in einem bestimmten Bereich der Vektorebene liegt. Dieser Bereich kann aufgrund der bekannten Werte bzw. der Erfahrungswerte für ein Abwürgerisiko ohne weiteres ermittelt werden. Sobald das Steuergerät für den Antriebsstrang feststellt, dass der Zustandsvektor in diesen Bereich fällt, wird eine entsprechende Maßnahme eingeleitet, die das Abwürgen verhindert, so z.B. schnelles Öffnen der Kupplung, gezielter Abbau des Kupplungsmoments, Erhöhen der genannten Schwellen etc.

Es ist möglich, dass dieser Bereich für den Zustandsvektor, der ein Abwürgerisiko signalisiert, an die aktuellen oder erfassten Werte für Drehzahl und Drehzahlgradient angepasst wird, so dass der Bereich durch einen "Lernprozess" stets optimiert wird.

Es ist natürlich möglich, den abwürgegefährdeten Bereich nicht nur für die Größen Motordrehzahl und Drehzahlgradient zu bestimmen. Es ist auch denkbar, dass etwa die oben genannten Werte für den Momentenbedarf der Verbraucher, Motortemperatur etc. als Zustandsgrößen verwendet werden, aus denen ein Vektorraum gebildet ist, in dem ein Bereich abgegrenzt ist, in dem ein erhöhtes Abwürgerisiko vorliegt. Der jeweilige Zustandsvektor wird dann, wenn er innerhalb dieses Bereichs liegt bzw. in den Bereich eintritt, derart verändert, dass er wiederum in dem Vektorraum liegt, in dem ein Abwürgen nicht erfolgen kann.

Wie oben erwähnt, besteht ein besonderes Risiko des Abwürgens des Motors beim Anfahren des Fahrzeugs während des Zuziehens bzw. Einrückens der automatisierten Kupplung. Demnach wird im Rahmen einer weiteren Ausge-staltung der Erfindung bevorzugt der Schwellenwert, ab dem ein Abwürgen des Motors auftreten kann, als Funktion der zeitlichen Abnahme der Drehzahl, d. h. des Drehzahlgradienten, gewählt, wobei der Schwellenwert um so größer ist, je größer der Drehzahlgradient ist.

Sobald demnach der Schwellenwert unterschritten wird, wird die Kupplung schnell geöffnet, und zwar so lange, bis die Motordrehzahl wieder außerhalb des kritischen Bereiches ist und die Gefahr des Abwürgens beim Zuziehen der Kupplung nicht mehr besteht.

Es sei darauf hingewiesen, dass die zeitliche Abnahme bei Verringerung der Drehzahl natürlich negativ ist, wobei hier im weiteren Verlauf der Drehzahlgradient positiv aufgefasst wird, d. h. dem Betrag der zeitlichen Änderung entspricht.

Gemäß einer Ausführungsform der Erfindung wird bei Unterschreiten des Schwellenwertes und nach Einleiten des Öffnen der automatisierten Kupplung der Drehzahlgradient auf dem Wert im Moment des Öffnens der automatisierten Kupplung konstant gehalten, wonach eine erneute Berechnung des Drehzahlgradienten erst wieder erfolgt, wenn die Drehzahl den Schwellenwert deutlich überschreitet. Auf diese Weise wird verhindert, dass sich der Schwellenwert z. B. aufgrund größer werdendem Drehzahlgradienten während des Kupplungsöffnens verändert.

Gemäß einer Ausführungsform der Erfindung ist der Schwellenwert n(Abwürg), bei dem die automatisierte Kupplung geöffnet wird, die Summe eines Basiswertes n(Basis) und eines vom Drehzahlgradienten dn/dt abhängigen Offset-Wertes n(Offset), also

$$n(Abwürg) = n(Basis) + n(Offset).$$

Der Offset-Wert n(Offset) ist hierbei das Verhältnis des Drehzahlgradienten dn/dt minus einem unteren Gradientenwert $(dn/dt)_u$ zu einem oberen Gradientenwert $(dn/dt)_o$ minus dem unteren Grenzwert $(dn/dt)_u$ multipliziert mit einem konstanten Drehfaktor A, also

$$n(Offset) = A \frac{dn/dt - (dn/dt)_u}{(dn/dt)_o - (dn/dt)_u}$$

wobei

n(Abwürg) = Drehzahl-Abwürgeschwelle des Motors

n(Basis) = Basis-Abwürgeschwelle

n(Offset) = gradientenabhängiger Drehzahl-Offset

A = maximal gewünschter Drehzahl-Offset auf die Basis-Abwürgeschwelle

dn/dt = Drehzahlgradient

$(dn/dt)_o$ = oberer Gradienten-Grenzwert, bis zu dem das Anheben der Abwürgedrehzahl wirksam sein soll

$(dn/dt)_u$ = unterer Gradienten-Grenzwert, bis zu dem das Anheben der Abwürgedrehzahl wirksam sein soll

Mit dem Drehfaktor A kann die maximale Anhebung der Abwürgedrehzahl bestimmt werden. Dieser Schwellenwert sollte, wie bereits erwähnt, nach oben und unten sinnvoll beschränkt werden, da ein sehr hoher Wert dazu führt, dass die Kupplung sehr lange geöffnet wird und so der Motor kurzzeitig wegtouren kann.

Prinzipiell kann die Anhebung der Abwürgedrehzahl auch für andere Fahrzeuge und beliebige andere Situationen, in denen Abwürgegefahr besteht, angewandt werden; dies ist vor allem auch deshalb sinnvoll und leicht möglich, weil die Einstellung der Parameter "unterer Grenzwert" und "oberer Grenzwert" für die Drehzahl und der Drehfaktor A auf einfache Weise vorgenommen werden kann, so dass die Anhebung der Abwürgedrehzahl universell einsetzbar ist.

Mit den Parametern oberer bzw. unterer Gradientenwert können Werte gesetzt werden, zwischen denen die Berechnung des Offset-Wertes der Drehzahl durchgeführt werden soll. Üblicherweise wird zwischen der Abwürgedrehzahl und dem Drehzahlgradienten ein linearer Zusammenhang gewählt. Es sind auch andere Abhängigkeiten, z. B. eine parabelförmige Funktion möglich.

Die Berechnung des Schwellenwertes zum Verhindern des Abwürgens des Motors kann im übrigen auch gangabhängig gestaltet werden, so dass z. B. ein Abwürgeschutz im zweiten, dritten, vierten oder fünften Gang ermöglicht wird. Hierbei wird der Schwellenwert um so größer gewählt, je höher der jeweilige Gang ist.

Ebenso kann der Schwellenwert in Abhängigkeit der Stellung der Drosselklappe und um so größer gewählt werden, je offener die Drosselklappe ist. Ferner kann bei der Berechnung der Abwürgedrehzahl, d. h. des Schwellenwertes, speziell auf das erwähnte Warnruckeln bezogen, eine Unterscheidung zwischen der Rampen-Phase und der Zuziehphase beim Schließen der Kupplung getroffen werden, da die Abwürgewahrscheinlichkeit beim Zuziehen der Kupplung wesentlich größer ist.

Das Flag "Kupplung schnell öffnen" kann bedeuten, dass die Kupplung ohne Verzögerung auf Hub gefahren wird; möglich wäre natürlich eine andere Maßnahme, z. B. "Kupplung etwas öffnen, um Schlupf zu erreichen" oder dergleichen.

Zur Vereinfachung des Verfahrens bzw. einzelner Verfahrensschritte kann es günstig sein, ab einem bestimmten Drehzahlgradienten für den Offset-Wert einen konstanten Wert zu wählen, welcher vorzugsweise zum Basiswert hinzu addiert wird.

Die oben geschilderten Maßnahmen des Abwürgeschutzes können vorzugsweise während der Phase des Warnruckeln angewendet werden. Ferner kann der Abwürgeschutz z. B. auch bei einem Knallstart im 2., 3., 4. und 5. Gang eingesetzt werden, um insbesondere bei Fahrzeugen mit EKM oder ASG ein Abwürgen unter allen Umständen zu verhindern.

Eine Weiterbildung der Erfindung kann vorsehen, dass bei Erreichen der Abwürgeschwelle die Kupplung weiter als bis auf den normalen Öffnungswert, z. B. Kupplungsmoment $M_k$ = 0 Nm, geöffnet wird. Dies deshalb, um zu verhindern, dass durch die Systemverzögerung des Kupplungsstellers trotzdem der Motor abgewürgt wird. Diese Maßnahme kann zusätzlich zu den obigen Maßnahmen oder unabhängig davon vorgesehen werden.

Auf diese Weise kann der Tastpunkt physikalisch verstellt werden, ohne dass dieses bei der Kupplungssteuerung berücksichtigt wird. Durch die Vorgabe eines überhöhten Sollweges kann erreicht werden, dass die Kupplung frühzeitiger trennt als dies bei bekannten Verfahren vorgesehen ist, wodurch ein Abwürgen des Motors verhindert wird.

Beispielsweise kann vorgesehen werden, dass die Regelung des Kupplungsstellers bei großen Regelabweichungen zunächst mit der maximalen zulässigen Stellgröße bestromt. Vorzugsweise kann der Regler erst, wenn die Regelabweichung einen bestimmten Betrag unterschreitet, den Motor abbremsen, um z. B. einen aperiodischen Einlauf in die Sollgröße zu erreichen. Wird nun die Kupplung weiter als auf die Position von 0 Nm geöffnet, kann durch das spätere Einregeln die Kupplung eher geöffnet werden.

Ferner kann vorgesehen werden, dass zum Verhindern des Abwürgens die Sollwertvorgabe durch eine differenzierende Vorsteuerung verändert wird, so dass dem Regler eine veränderte Regelabweichung vorgespielt wird.

Es ist auch möglich, dass zum Verbessern des Abwürgeschutzes dem Regler des Kupplungsstellers durch Änderung der Regelparameter z. B. ein Überschwingverhalten oder dergleichen aufgeprägt wird. Wenn beispielsweise ein Abwürgerisiko erkannt wird, kann vorzugsweise auf einen neuen Lageregler-Parametersatz umgeschaltet werden, welcher z. B. Überschwingungen von etwa 2 mm bis 3 mm zulässt.

Auf diese Weise ist das Einschwingverhalten des Reglers schneller und die Kupplung kann frühzeitiger geschlossen werden. Denkbar sind auch geeignete Kombinationen der vorgenannten Maßnahmen.

Das erfindungsgemäße Verfahren kann sowohl bei einem Fahrzeug mit einer automatisierten Kupplung (EKM) als auch bei einem Fahrzeug mit einem automatisierten Getriebes (ASG) eingesetzt werden. Denkbar sind auch andere Einsatzgebiete für den erfindungsgemäßen Abwürgeschutz.

Weitere Vorteile und vorteilhafte Ausgestaltungen der Erfindung ergeben sich aus den Unteransprüchen und der Zeichnung.

Es zeigen:

Figur 1  eine Darstellung des Verlaufes des Drehzahlgradienten über der Drehzahl mit dem Bereich von abwürgegefährdeten Situationen gemäß der Erfindung;

Figur 2  einen erfindungsgemäßen Verlauf der Abwürgeschwelle;

Figur 3  ein Ablaufdiagramm zur drehzahlgradienten Anhebung der Abwürgedrehzahl gemäß der Erfindung;

Figur 4  einen Verlauf des Kupplungsstellerweges und des Kupplungsmomentes über der Zeit mit einem überhöhten Sollweg gemäß der Erfindung;

Figur 5 einen Verlauf des Kupplungsstellerweges und des Kupplungsmomentes über der Zeit mit einer differenzierenden Vorsteuerung der Sollwegvorgabe gemäß der Erfindung; und

Figur 6 einen Verlauf des Kupplungsstellerweges und des Kupplungsmomentes über der Zeit mit einem Überschwingverhalten gemäß der Erfindung.

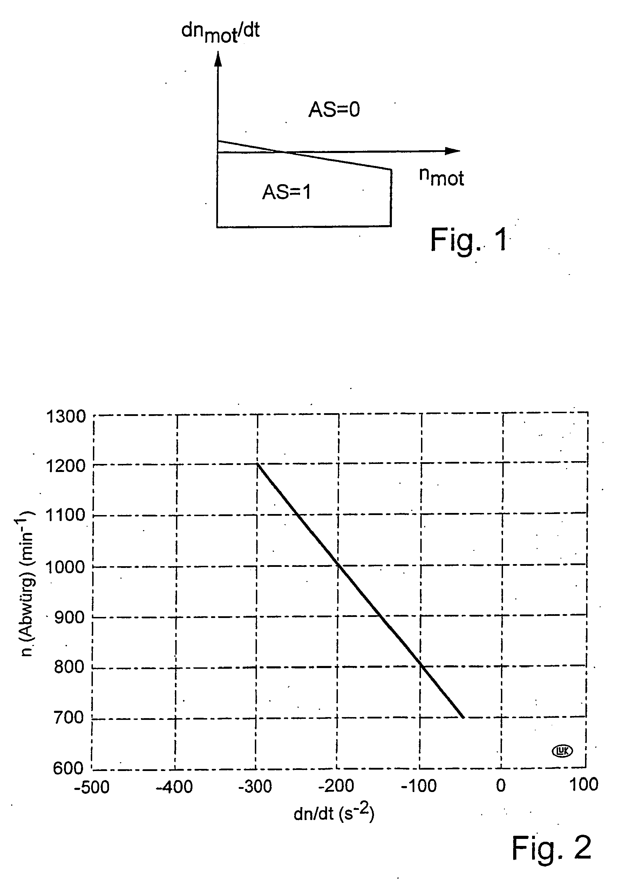

In Fig. 1 ist schematisch ein Vektorraum für die beiden Größen Drehzahlgradient $dn_{mot}/dt$ und Motordrehzahl $n_{mot}$ dargestellt, wobei mit AS=1 der Bereich gekennzeichnet ist, in dem die Gefahr des Abwürgens besteht, wenn der jeweilige aus den beiden Größen gebildete Zustandsvektor in diesen Bereich weist. Der übrige Bereich ist mit AS=0 bezeichnet. In diesem Bereich besteht eine Gefahr des Abwürgens nicht.

In Figur 2 ist die Anhebung der Abwürgedrehzahl n(Abwürg) entsprechend der o. a. Formel ausgehend von einem Basiswert n(Basis) von 700 [$min^{-1}$] über dem Drehzahlgradienten dn/dt dargestellt. Der untere Grenzwert $(dn/dt)_u$ ist zu 50 $s^{-2}$, der obere Grenzwert $(dn/dt)_o$ zu 300 $s^{-2}$ und der Drehfaktor zu 500 gewählt. Zwischen den Parametern Abwürgedrehzahl und Drehzahlgradient ist in diesem Fall ein linearer Zusammenhang gewählt.

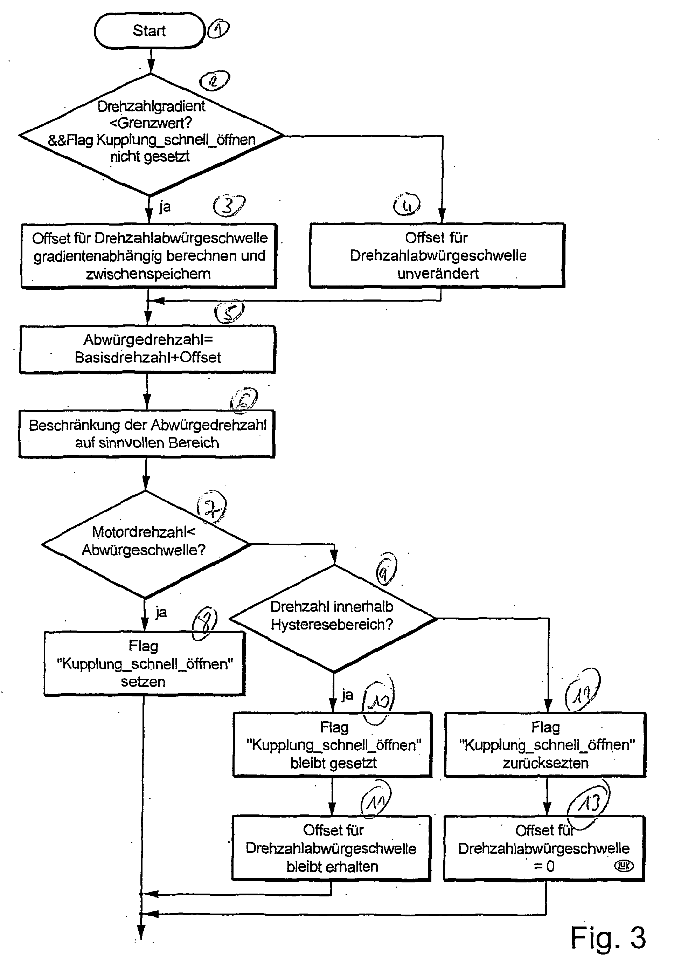

In Figur 3 ist ein Ablaufdiagramm gemäß der Erfindung dargestellt, wobei ein mögliches Vorgehen bei der Erhöhung der Abwürgedrehzahl in Abhängigkeit des Drehzahlgradienten gemäß der Erfindung angedeutet wird.

Wenn nach dem Start der Drehzahlgradient einen unteren Grenzwert unterschreitet, wird der Offset-Wert nach der o. g. Gleichung berechnet. Dieser Offset-Wert wird zwischengespeichert und danach der Schwellenwert für die Abwürgedrehzahl berechnet. Fällt die Motordrehzahl unter diese Schwelle, wird im Berechnungsschema ein Flag gesetzt, das angibt, dass die automatisierte Kupplung schnell geöffnet werden muss. Dieses Flag wird erst wieder zurückgesetzt, wenn die Motordrehzahl die Abwürgeschwelle plus einen Hysteresewert deutlich überschreitet. Gleichzeitig dient dieses Flag als Verriegelung für die Berechnung des Offset-Wertes. Dieses ist ein wichtiger Aspekt der Erfindung, dass nämlich der Offset-Wert zwischengespeichert und so lange konstant gehalten wird, bis das Flag wieder zurückgesetzt wird. Dadurch wird der Offset-Wert erst wieder neu berechnet, wenn keine Gefahr des Abwürgens des Motors mehr besteht. So wird verhindert, dass sich der Schwellenwert für die Drehzahlabwürgeschwelle z. B. aufgrund eines größer werdenden Drehzahlgradienten während des Kupplungsöffnens verändert. Während des Öffnens der Kupplung wird überprüft, ob die Drehzahl innerhalb des Hysteresebereiches bleibt. Falls dies der Fall ist, bleibt das Flag "Kupplung schnell öffnen" gesetzt und der Offset-Wert für die Abwürgeschwelle der Drehzahl wird konstant gehalten. Wenn die Drehzahl wieder außerhalb des Hysteresebereiches liegt und damit ein Abwürgen praktisch nicht erfolgen kann, wird das Flag "Kupplung schnell öffnen".zurückgesetzt und ebenfalls der Offset-Wert für die Abwürgeschwelle der Drehzahl auf Null gesetzt. Damit ist jetzt nur noch der Basiswert n (Basis) für die Drehzahl als Abwürgeschwelle wirksam.

Bei den beschriebenen Verfahren wird bei Erreichen der Abwürgedrehzahl die Kupplung rasch geöffnet, um zu verhindern, dass durch die Systemverzögerung des Kupplungsstellers trotzdem der Motor abgewürgt wird.

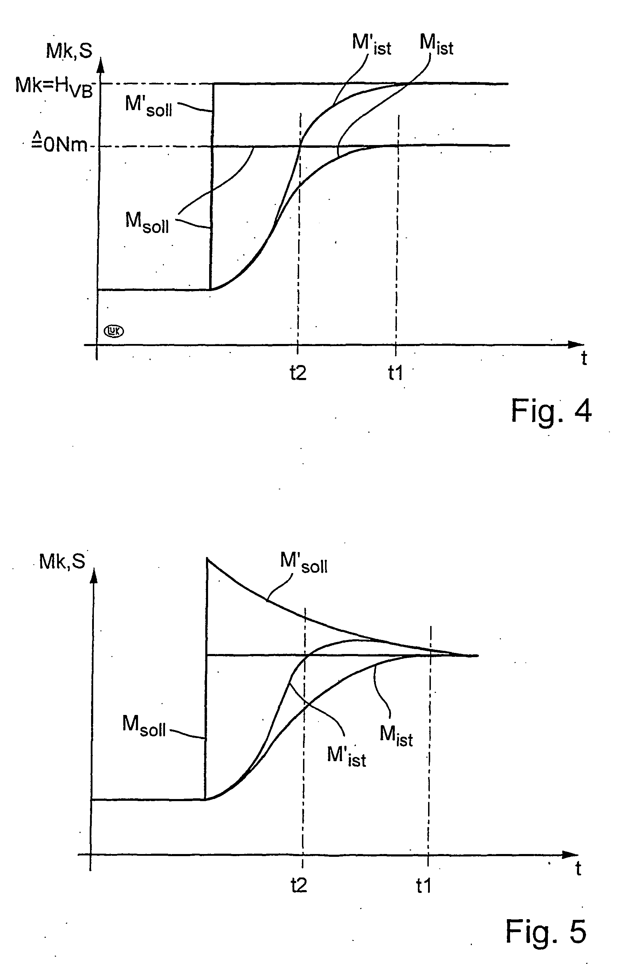

Zusätzlich zu den obigen Maßnahmen oder unabhängig hiervon kann die Kupplung weiter geöffnet werden, als dieses einem Kupplungsmoment von 0 Nm entspricht. Diese Maßnahme ist anhand der Figuren 4 bis 6 erläutert.

In Fig. 4 ist das Kupplungsmoment $M_k$ und der Kupplungsstellerweg S bzw. der Hub über der Zeit t aufgetragen. In der Fig. 4 ist mit $M_{soll}$ der Sollverlauf des Kupplungsmoments über der Zeit beim schnellen Setzen des Kupplungsmoments auf den Wert 0 Nm dargestellt. Aufgrund der Systemverzögerung ergibt sich hierbei ein istweg $M_{ist}$, so dass das Kupplungsmoment, d.h. das vollständige Öffnen der Kupplung erst nach einer Zeit $t_1$ erreicht wird, da bei der Öffnung der Kupplung noch ein Restmoment übertragen wird.

Öffnet man jedoch die Kupplung weiter als auf den Wert von 0 Nm, z.B. bis auf einen Wert des Kupplungsmoments $M_{k=HUB}$, so erreicht man aufgrund der Verzögerung des Kupplungsstellers, dass die Kupplung eher trennt als dieses mit der vorherigen Maßnahme möglich war. Dargestellt ist in Fig. 4 der Sollweg $M'_{soll}$ und der korrespondiere Istwert $M'_{ist}$ der Kupplungsöffnung. Man sieht, dass das Kupplungsmoment 0 Nm bereits zum Zeitpunkt $t_2$ erreicht wird; in dem dargestellten Fall also in der Hälfte der Zeit für die vollständige Öffnung der Kupplung mit dem Sollweg $M_{soll}$. Öffnet man somit die Kupplung weiter als auf die Position des Kupplungsmoments 0 Nm, so ist durch das spätere Einregeln des Kupplungsstellers die Kupplung eher geöffnet.

Die in Fig. 4 dargestellte Sollwegvorgabe kann natürlich anders gestaltet werden, etwa durch eine in Fig. 5 gezeigte differenzierende Vorsteuerung des Sollwegs $M'_{soll}$. Wie bei der Sollwegvorgabe gemäß Fig. 4 wird zunächst das Kupplungsmoment auf einen höheren Wert als 0 Nm eingestellt, wobei dann allerdings der Sollweg zeitlich gemäß einer Funktion zumindest der ersten Ableitung auf den Wert 0 Nm entsprechend dem in Fig. 4 Sollweg $M_{soll}$ abgesenkt wird. Auch hier sieht man, dass der durch die Vorsteuerung erreichte Istweg $M'_{ist}$ des Kupplungsmoments die vollständige Öffnung der Kupplung wesentlich früher ($t_2$) erreicht wird, als bei einer herkömmlichen Sollwegvorgabe. Durch eine derartige Vorsteuerung wird dem Kupplungsregler quasi eine veränderte Regelabweichung vorgespielt, so dass eine insgesamt schnellere Reaktion der Kupplung erreicht wird.

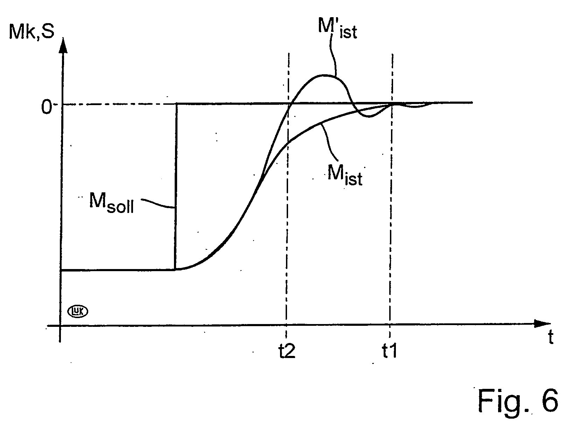

Es sind weitere Varianten denkbar, die Istverstellung der Kupplung in der Öffnungsphase zu verbessern. Ein solcher Weg ist in Fig. 6 dargestellt, in der wiederum das Kupplungsmoment $M_k$ und der Kupplungsstellerweg S über der Zeit aufgetragen ist. Als Referenz sind in der Fig. 6 der Sollweg $M_{soll}$ des Kupplungsmoments und der damit erreichbare Istweg $M_{ist}$ aufgezeichnet. Um eine schnelle Öffnung der Kupplung zu erreichen, kann für den Regler des Kupplungsstellers ein neuer Lageregler-Parametersatz eingeführt werden, der Überschwingungen des Istwegs $M_{ist}$ des Kupplungsmoments zulässt. Ein damit erzielbarer Istweg $M'_{ist}$ des Kupplungsmoments ist in der Fig. 6 dargestellt. Dieser neue Weg überschwingt den Wert des Kupplungsmoments von 0 Nm deutlich, so dass das Kupplungsmoment 0 Nm wesentlich früher ($t_2$) erreicht wird als mit dem herkömmlichen Istweg $M_{ist}$ zum Zeitpunkt $t_1$. Der neue Istweg $M'_{ist}$ schwingt nach Erreichen des Kupplungsmoments von 0 Nm wieder auf das Kupplungsmoment zurück und wird durch entsprechende Reglerdämpfung nach ein oder zwei Überschwingungen schließlich bei dem Kupplungsmoment von 0 Nm landen.

Es ist auch möglich, eine Kombination der in den Figuren 4, 5 und 6 dargestellten Maßnahmen zu verwenden.

## Patentansprüche

1. Verfahren zum Verhindern des Abwürgens eines Motors eines Kraftfahrzeuges, wobei in einem Antriebsstrang des Kraftfahrzeuges insbesondere eine automatisierte Kupplung geöffnet wird, wenn die Drehzahl eines Teiles im Antriebsstrang, vorzugsweise die Drehzahl des Motors selbst, unter einen bestimmten Schwellenwert, der Abwürgeschwelle, und/oder Kupplungsmoment abgebaut wird, wenn die Motordrehzahl unter einen weiteren Schwellenwert, der Auskuppelschwelle, fällt, **dadurch gekennzeichnet, dass** beim Erkennen eines möglichen Abwürgens wenigstens ein Schwellenwert zumindest in Abhängigkeit vom Momentenbedarf von Verbrauchsanlagen des Kraftfahrzeugs situationsbedingt verändert wird.

2. Verfahren nach Anspruch 1, **dadurch gekennzeichnet, dass** beim Erkennen eines möglichen Abwürgens die Auskuppelschwelle und/oder die Abwürgeschwelle erhöht werden.

3. Verfahren nach Anspruch 1 oder 2, **dadurch gekennzeichnet, dass** die Auskuppelschwelle und/oder die Abwürgeschwelle in Inkrementen verändert werden.

4. Verfahren nach Anspruch 3, **dadurch gekennzeichnet, dass** die Inkremente im Bereich der Startwerte der beiden Schwellen groß und in Richtung auf einen oberen Grenzwert klein gewählt werden.

5. Verfahren nach einem der vorhergehenden Ansprüche, **dadurch gekennzeichnet, dass** die Anzahl der Abwürger und die Anzahl der Fahrzyklen gespeichert werden, dass das Verhältnis zwischen der Anzahl der Abwürger und der Anzahl der Fahrzyklen bestimmt wird und dass dann, wenn dieses Verhältnis absinkt, die Schwellen wieder in Richtung auf den Startwert abgesenkt werden.

6. Verfahren nach einem der vorhergehenden Ansprüche, **dadurch gekennzeichnet, dass** zum Erkennen eines möglichen Abwürgens ein Vektorraum aus mehreren Zustandsgrößen gebildet wird und dass in diesem Vektorraum ein Bereich bestimmt wird, in dem Abwürgegefahr besteht.

7. Verfahren nach Anspruch 6, **dadurch gekennzeichnet, dass** als Zustandsgrößen zumindest die Motordrehzahl, der Drehzahlgradient, der Momentenbedarf durch Verbraucher, die Motortemperatur, die Bremsbetätigung und/oder die Reibmomenterhöhung der Kupplung verwendet wird.

8. Verfahren nach Anspruch 6 oder 7, **dadurch gekennzeichnet, dass** die Zustandsgrößen zur Bestimmung des Vektorraums aufgrund von Messwerten aus der Vergangenheit aktualisiert werden.

9. Verfahren nach einem der vorhergehenden Ansprüche, **dadurch gekennzeichnet, dass** zum Erkennen eines möglichen Abwürgens des Motors die Motortemperatur und/oder die Bremsbetätigung und/oder das Reibmoment der Kupplung bestimmt und die Schwellenwerte an diese Zustandsgrößen angepasst werden.

10. Verfahren nach Anspruch 9, **dadurch gekennzeichnet, dass** bei Vorliegen eines hohen Momentebedarfs und/oder eines kalten Motors und/oder einer starken Bremsbetätigung und/oder einer kritischen Reibmomenteerhöhung der Kupplung die Schwellenwerte verändert, insbesondere angehoben werden.

11. Verfahren nach einem der vorhergehenden Ansprüche, **dadurch gekennzeichnet, dass** beim Anfahren des Kraftfahrzeugs beim Einrücken der automatisierten Kupplung die Abwürgeschwelle eine Funktion der zeitlichen Abnahme der Drehzahl, d.h. des Drehzahlgradienten, und um so größer ist, je größer dieser Drehzahlgradient ist.

12. Verfahren nach Anspruch 11, **dadurch gekennzeichnet, dass** bei Unterschreiten des Schwellenwerts und nach Einleiten des Öffnens der automatischen Kupplung der Drehzahlgradient auf dem Wert im Moment des Öffnens der automatisierten Kupplung konstant gehalten wird und dass eine erneute Berechnung des Drehzahlgradienten erst erfolgt, wenn die Drehzahl den Schwellenwert wieder überschreitet.

**13.** Verfahren nach Anspruch 12, **dadurch gekennzeichnet, dass** eine erneute Berechnung des Drehzahlgradienten erst wieder erfolgt, wenn die Drehzahl den Schwellenwert und einen Hysteresewert überschreitet.

**14.** Verfahren nach einem der Ansprüche 11 bis 13, **dadurch gekennzeichnet, dass** der Schwellenwert n (Abwürg) der Drehzahl die Summe eines konstanten Basiswertes n(Basis) und eines vom Drehzahlgradienten dn/dt abhängigen Offset-Wertes n(Offset) ist, also n(Abwürg) = n(Basis) + n(Offset).

**15.** Verfahren nach Anspruch 14, **dadurch gekennzeichnet, dass** der Offset-Wert das Verhältnis des Drehzahlgradienten minus einem unteren Gradientenwert (dn/dt)$_u$ zu einem oberen Gradientenwert (dn/dt)$_o$ minus dem unteren Grenzwert multipliziert mit einem konstanten Drehfaktor A ist, also

$$n(Offset) = A \frac{dn/dt - (dn/dt)_u}{(dn/dt)_o - (dn/dt)_u}$$

**16.** Verfahren nach Anspruch 15, **dadurch gekennzeichnet, dass** ab einem bestimmten Drehzahlgradienten ein konstanter Wert für den Offset-Wert gewählt wird.

**17.** Verfahren nach Anspruch 16, **dadurch gekennzeichnet, dass** der konstante Offset-Wert zu dem Basiswert hinzu addiert wird.

**18.** Verfahren nach einem der vorstehenden Ansprüche, **dadurch gekennzeichnet, dass** der Schwellenwert abhängig von dem jeweiligen Gang eines Getriebes in dem Antriebsstrang des Motors ist und um so größer gewählt wird, je höher der Gang ist.

**19.** Verfahren nach einem der Ansprüche 11-17, **dadurch gekennzeichnet, dass** die Anhebung des Schwellenwertes aufgrund des Drehzahlgradienten nach einer nichtlinearen Funktion vorgesehen wird.

**20.** Verfahren nach einem der vorstehenden Ansprüche, **dadurch gekennzeichnet, dass** der Schwellenwert abhängig von der Stellung der Drosselklappe des Motors ist und um so größer gewählt wird, je offener die Drosselklappe ist.

**21.** Verfahren nach einem der vorstehenden Ansprüche, **dadurch gekennzeichnet, dass** beim Ansprechen des Abwürgeschutzes die Kupplung etwas geöffnet wird, um einen Schlupf zu ermöglichen.

**22.** Verfahren nach einem der Ansprüche 1 bis 21, **dadurch gekennzeichnet, dass** bei Erreichen der Abwürgeschwelle die Kupplung weiter als bis auf den normalen Öffnungswert bei einem Kupplungsmoment M$_k$ von 0 Nm geöffnet wird.

**23.** Verfahren nach Anspruch 22, **dadurch gekennzeichnet, dass** zum Öffnen der Kupplung ein überhöhter Sollweg M'$_{soll}$ für den Öffnungsweg der Kupplung vorgegeben wird.

**24.** Verfahren nach Anspruch 22 oder 23, **dadurch gekennzeichnet, dass** der Sollweg M$_{soll}$ der Steuerung bzw. Regelung eines Kupplungsstellers vorgegeben wird.

**25.** Verfahren nach Anspruch 24, **dadurch gekennzeichnet, dass** der Steuerung bzw. Regelung des Kupplungsstellers ein überhöhter Sollweg M'$_{soll}$ vorgegeben wird, der sich mit Vorsteuerung differentiell dem Sollweg M$_{soll}$ ohne Vorsteuerung annähert.

**26.** Verfahren nach einem der Ansprüche 22 bis 25, **dadurch gekennzeichnet, dass** der Steuerung bzw. dem Regler für den Kupplungssteller durch Änderung der Regelparameter ein Überschwingverhalten aufgeprägt wird.

**Claims**

**1.** A method for preventing stalling of an engine of a motor vehicle, wherein in particular an automated clutch in a power train of the motor vehicle is disengaged if the speed of rotation of a part in the power train, preferably the speed of the engine itself, falls below a certain threshold value, the stall threshold, and/or clutch torque is reduced if the engine speed falls below another threshold value, the clutch disengagement threshold, **characterized in that** when a possible stall is detected at least one threshold value is modified at the request of the system, depending at least on the torque demand of consumer equipment of the motor vehicle.

**2.** A method according to Claim 1, **characterized in that** when a possible stall is detected the clutch disengagement threshold and/or the stall threshold are raised.

**3.** A method according to Claim 1 or 2, **characterized in that** the clutch disengagement threshold and/or the stall threshold are modified in increments.

**4.** A method according to Claim 3, **characterized in that** the increments chosen are large in the vicinity of the starting values of the thresholds, and small in the direction of an upper limiting value.

**5.** A method according to one of the preceding claims, **characterized in that** the number of stalls and the number of driving cycles are stored, that the ratio between the number of stalls and the number of driving cycles is determined, and that if this ratio drops the thresholds are lowered again in the direction of the starting value.

**6.** A method according to one of the preceding claims, **characterized in that** when a possible stall is detected a vector space is formed from a plurality of state variables, and that a zone is determined in this vector space in which there is danger of stalling.

**7.** A method according to Claim 6, **characterized in that** at least the engine speed, the engine speed gradient, the torque demanded of the consumer, the engine temperature, the brake operation and/or the increase in friction torque of the clutch are used as state variables.

**8.** A method according to Claim 6 or 7, **characterized in that** the state variables for determining the vector space are updated on the basis of measured values from the past.

**9.** A method according to one of the preceding claims, **characterized in that** to detect a possible stalling of the engine the engine temperature and/or the brake operation and/or the friction torque of the clutch are determined, and the threshold values are adapted to these state variables.

**10.** A method according to Claim 9, **characterized in that** in the presence of a high demand for torque and/or a cold engine and/or vigorous brake operation and/or a critical increase in friction torque of the clutch the threshold values are modified, in particular they are raised.

**11.** A method according to one of the preceding claims, **characterized in that** when the vehicle is set in motion, as the automatic clutch is engaged the stall threshold is a function of the decrease in rotational speed over time, i.e. the speed gradient, and the greater this speed gradient is, the higher the stall threshold is.

**12.** A method according to Claim 11, **characterized in that** when the value is below the threshold and after disengagement of the automatic clutch has been initiated, the rotational speed gradient is held constant at the value at the moment of disengagement of the automated clutch, and that the rotational speed gradient is not recalculated until the speed again exceeds the threshold value.

**13.** A method according to Claim 12, **characterized in that** a recalculation of the rotational speed gradient does not occur until the speed exceeds the threshold value and a hysteresis value.

**14.** A method according to one of Claims 11 to 13, **characterized in that** the threshold value n(stall) of the rotational speed is the sum of a constant base value n(base) and an offset value n(offset) that depends on the rotational speed gradient dn/dt, i.e. n(stall) = n(base) + n(offset).

**15.** A method according to Claim 14, **characterized in that** the offset value is the ratio of the rotational speed gradient minus a lowest gradient value $(dn/dt)_u$ to a highest gradient value $(dn/dt)_o$ less the lower limiting value, multiplied by a constant rotational factor A, i.e.

$$n(\text{offset}) = A \frac{dn/dt - (dn/dt)u}{(dn/dt)o - (dn/dt)u}.$$

**16.** A method according to Claim 15, **characterized in that** starting from a certain rotational speed gradient a constant value is chosen for the offset value.

**17.** A method according to Claim 16, **characterized in that** the constant offset value is added to the base value.

**18.** A method according to one of the preceding claims, **characterized in that** the threshold value is dependent on the particular gear of a transmission in the power train of the engine, and the higher the gear is the higher the threshold value that is chosen.

**19.** A method according to one of Claims 11 through 17, **characterized in that** the elevation of the threshold value on the basis of the rotational speed gradient is based on a non-linear function.

**20.** A method according to one of the preceding claims, **characterized in that** the threshold value is dependent on the position of the throttle valve of the engine, and the wider open the throttle valve is, the higher the threshold value that is chosen.

**21.** A method according to one of the preceding claims, **characterized in that** when the stall protection is activated the clutch is disengaged somewhat, in order to enable slippage.

**22.** A method according to one of Claims 1 to 21, **characterized in that** when the stall threshold is reached the clutch is opened farther than the normal opening value for a clutch torque $M_k$ of 0 Nm.

**23.** A method according to Claim 22, **characterized in that** to disengage the clutch an excessive target travel distance M'$_{target}$ is prescribed for the disengagement travel of the clutch.

**24.** A method according to Claim 22 or 23, **characterized in that** the target travel distance M$_{target}$ of the controller or regulator of a clutch actuator is prescribed.

**25.** A method according to Claim 24, **characterized in that** an excessive target travel distance M'$_{target}$ is prescribed for the controller or regulator of the clutch actuator, which with pilot control differentially approaches the target travel distance M$_{target}$ without pilot control.

**26.** A method according to one of Claims 22 to 25, **characterized in that** overshoot behavior is impressed on the controller or regulator for the clutch actuator by modifying the regulating parameters.

## Revendications

**1.** Procédé pour empêcher le calage d'un moteur d'un véhicule automobile, dans lequel, dans une ligne d'entraînement du véhicule automobile, en particulier un embrayage automatique est ouvert lorsque la vitesse d'une pièce dans la ligne d'entraînement, de préférence la vitesse du moteur lui-même, descend en dessous d'une valeur seuil définie, le seuil de calage et/ou d'un moment de l'embrayage lorsque la vitesse du moteur tombe en dessous d'une autre valeur seuil, le seuil de débrayage, **caractérisé en ce que**, lors de l'identification d'un éventuel calage, au moins une valeur seuil est modifiée, selon la situation, au moins en fonction de la demande des moments d'installations de consommation du véhicule automobile.

**2.** Procédé selon la revendication 1, **caractérisé en ce que** le seuil de débrayage et/ou le seuil de calage sont augmentés lorsqu'un éventuel calage est identifié.

**3.** Procédé selon la revendication 1 ou 2, **caractérisé en ce que** le seuil de débrayage et/ou le seuil de calage sont modifiées par incréments.

**4.** Procédé selon la revendication 3, **caractérisé en ce que** les incréments sont sélectionnés de manière à être grands dans la plage des valeurs de départ des deux seuils et petits en direction d'une valeur limite supérieure.

**5.** Procédé selon l'une quelconque des revendications précédentes, **caractérisé en ce que** le nombre de calages et le nombre de cycles de conduite sont mémorisés, **en ce que** le rapport entre le nombre de calages et le nombre de cycles de conduite est déterminé et **en ce qu'**ensuite, lorsque ce rapport baisse, les seuils sont de nouveau baissés en direction de la valeur de départ.

**6.** Procédé selon l'une quelconque des revendications précédentes, **caractérisé en ce qu'**un espace vectoriel est formé à partir de plusieurs grandeurs d'état pour identifier un éventuel calage et **en ce qu'**une plage est déterminée dans cet espace vectoriel, dans laquelle il existe un risque de calage.

**7.** Procédé selon la revendication 6, **caractérisé en ce que** l'on utilise, comme grandeurs d'état, au moins la vitesse du moteur, le gradient de vitesse, la demande des moments par des consommateurs, la température du moteur, l'actionnement des freins et/ou l'augmentation du moment de friction de l'embrayage.

**8.** Procédé selon la revendication 6 ou 7, **caractérisé en ce que** les grandeurs d'état pour déterminer l'espace vectoriel sont actualisées en raison de valeurs de mesure antérieures.

**9.** Procédé selon l'une quelconque des revendications précédentes, **caractérisé en ce que** la température du moteur et/ou l'actionnement des freins et/ou le moment de friction de l'embrayage sont déterminés pour identifier un éventuel calage du moteur et **en ce que** les valeurs seuils sont adaptées à ces grandeurs d'état.

**10.** Procédé selon la revendication 9, **caractérisé en ce que**, lorsqu'il y a une demande des moments élevée et/ou un moteur froid et/ou un fort actionnement des freins et/ou une augmentation critique des moments de friction de l'embrayage, les valeurs seuils sont modifiées, en particulier augmentées.

**11.** Procédé selon l'une quelconque des revendications précédentes, **caractérisé en ce que**, lors du démarrage du véhicule automobile, lorsque l'embrayage automatique est enclenché, le seuil de calage est fonction de la déscélération, c'est-à-dire du gradient de vitesse, et est d'autant plus grand que ce gradient de vitesse est élevé.

**12.** Procédé selon la revendication 11, **caractérisé en ce qu'**en cas de dépassement négatif de la valeur seuil et après l'initiation de l'ouverture de l'embrayage automatique, le gradient de vitesse est maintenu constant à la valeur au moment de l'ouverture de l'embrayage automatique et **en ce qu'**un nouveau calcul du gradient de vitesse n'est effectué que lorsque la vitesse dépasse de nouveau la valeur seuil.

**13.** Procédé selon la revendication 12, **caractérisé en**

**ce qu'**un nouveau calcul du gradient de vitesse n'est effectué que lorsque la vitesse dépasse la valeur seuil ainsi qu'une valeur d'hystérésis.

14. Procédé selon l'une quelconque des revendications 11 à 13, **caractérisé en ce que** la valeur seuil n (calage) de la vitesse est la somme d'une valeur de base constante n(base) et d'une valeur offset n(offset) dépendant du gradient de vitesse dn/dt, soit n (calage)= n(base)+n(offset).

15. Procédé selon la revendication 14, **caractérisé en ce que** la valeur offset est le rapport du gradient de vitesse moins une valeur de gradient inférieure $(dn/dt)_u$ sur une valeur de gradient supérieure $(dn/dt)_o$ moins la valeur limite inférieure, multiplié par un facteur de rotation constant A, soit

$$n(\text{offset}) = A \frac{dn/dt - (dn/dt)u}{(dn/dt)o - (dn/dt)u}.$$

16. Procédé selon la revendication 15, **caractérisé en ce qu'**à partir d'un gradient de vitesse défini, une valeur constante est sélectionnée pour la valeur offset.

17. Procédé selon la revendication 16, **caractérisé en ce que** la valeur offset constante est additionnée à la valeur de base.

18. Procédé selon l'une quelconque des revendications précédentes, **caractérisé en ce que** la valeur seuil dépend de la vitesse respective d'une boîte de vitesses dans la ligne d'entraînement du moteur et **en ce qu'**elle est sélectionnée d'autant plus grande que la vitesse est grande.

19. Procédé selon l'une quelconque des revendications 11 à 17, **caractérisé en ce que** l'élévation de la valeur seuil en raison du gradient de vitesse est prévue selon une fonction non linéaire.

20. Procédé selon l'une quelconque des revendications précédentes, **caractérisé en ce que** la valeur seuil dépend de la position du papillon des gaz du moteur et **en ce qu'**elle sélectionnée d'autant plus grande que le papillon des gaz est ouvert.

21. Procédé selon l'une quelconque des revendications précédentes, **caractérisé en ce que**, lors de l'activation de la protection de calage, l'embrayage est un peu ouvert afin de permettre un glissement.

22. Procédé selon l'une quelconque des revendications 1 à 21, **caractérisé en ce que**, lorsque le seuil de calage est atteint, l'embrayage est ouvert un peu plus que jusqu'à la valeur d'ouverture normale pour un moment d'embrayage $M_k$ de 0 Nm.

23. Procédé selon la revendication 22, **caractérisé en ce qu'**une trajectoire théorique relevée M'$_{soll}$ est prédéfinie pour la trajectoire d'ouverture de l'embrayage, afin d'ouvrir l'embrayage.

24. Procédé selon l'une quelconque des revendications 22 ou 23, **caractérisé en ce que** la trajectoire théorique $M_{soll}$ de la commande ou du réglage d'un actionneur de l'embrayage est prédéfinie.

25. Procédé selon la revendication 24, **caractérisé en ce qu'**une trajectoire théorique M'$_{soll}$ relevée, qui se rapproche, avec commande pilote, de manière différentielle de la trajectoire théorique $M_{soll}$ sans commande pilote, est prédéfinie pour la commande ou le réglage de l'actionneur de l'embrayage.

26. Procédé selon l'une quelconque des revendications 22 à 25, **caractérisé en ce qu'**un comportement de suroscillation est empreint à la commande ou au régulateur, pour l'actionneur de l'embrayage, par modification des paramètres de réglage.

$dn_{mot}/dt$

AS=0

AS=1

$n_{mot}$

Fig. 1

n (Abwürg) (min$^{-1}$)

1300

1200

1100

1000

900

800

700

600

-500    -400    -300    -200    -100    0    100

dn/dt (s$^{-2}$)

Fig. 2

Start ①

② Drehzahlgradient <Grenzwert? &&Flag Kupplung_schnell_öffnen nicht gesetzt

ja ③

Offset für Drehzahlabwürgeschwelle gradientenabhängig berechnen und zwischenspeichern

④ Offset für Drehzahlabwürgeschwelle unverändert

⑤ Abwürgedrehzahl= Basisdrehzahl+Offset

⑥ Beschränkung der Abwürgedrehzahl auf sinnvollen Bereich

⑦ Motordrehzahl< Abwürgeschwelle?

ja ⑧

Flag "Kupplung_schnell_öffnen" setzen

⑨ Drehzahl innerhalb Hysteresebereich?

ja ⑩

Flag "Kupplung_schnell_öffnen" bleibt gesetzt

⑪ Offset für Drehzahlabwürgeschwelle bleibt erhalten

⑫ Flag "Kupplung_schnell_öffnen" zurücksezten

⑬ Offset für Drehzahlabwürgeschwelle = 0

Fig. 3

Fig. 4

Fig. 5

Fig. 6